# EUROPEAN PATENT SPECIFICATION

(11) **EP 4 245 471 B1**
(45) Date of publication and mention of the grant of the patent: **13.11.2024**
(21) Application number: 22211543.8
(22) Date of filing: 06.12.2022
(51) Int. Cl.: B25J 9/00

(54) **WEARABLE SUIT AND CONTROL METHOD THEREOF**
WEARABLE-ANZUG UND STEUERUNGSVERFAHREN DAFÜR
VÊTEMENT PORTABLE ET SON PROCÉDÉ DE COMMANDE

(30) Priority: 15.03.2022 KR 20220032362; 15.04.2022 KR 20220046615; 19.04.2022 KR 20220047956
(43) Date of publication of application: 20.09.2023
(73) Proprietor: Hyundai Mobis Co., Ltd., Gangnam-gu Seoul 06141 (KR)
(72) Inventor: KIM, Young Min, 18113 Osan-si, Gyeonggi-do (KR); CHOI, Yong Seok, 17162 Yongin-si, Gyeonggi-do (KR); LEE, Soong Do, 10125 Gimpo-si, Gyeonggi-do (KR); JEONG, Lae Hoon, Suwon-si, Gyeonggi-do (KR)
(74) Representative: Vossius & Partner Patentanwälte Rechtsanwälte mbB

(56) References cited:
- WO-A1-2019/016809
- KR-A- 20210 153 910
- US-A1- 2017 203 432

## Description

### TECHNICAL FIELD

The present disclosure relates to a wearable suit and control method thereof.

### BACKGROUND

The description in this section merely provides background information of the present disclosure and does not necessarily constitute prior art.

A wearable robot and a wearable suit (hereinafter collectively a "wearable suit") refer to a type of robot that is worn on a human body. A user is directly in charge of posture control, context-awareness, and motion signal generation, which artificial intelligence of the robot is responsible for, and the wearable suit responds to various situations to assist muscular strength and mobility of the user or the like.

With the development of sensors, control, and software technologies, the wearable suits are being used in various fields such as military use, disaster relief, industrial work, rehabilitation treatment, and daily life assistance. The wearable suit can increase a work performance time and a work range of the user by assisting physical ability of the user in environments such as disaster sites and mountainous terrain. The wearable suit may be used for work and rehabilitation treatment by assisting the muscular strength and physical defects of the user in daily life.

The wearable suit may be divided into a passive type suit and an active type suit according to a power implementation method. Here, the passive type means a method using a preset force such as a spring and an elastic band, and the active type means a method using a variable force such as a motor and hydraulic pressure.

KR 2021-0 153 910 A discloses a method of controlling a wearable suit according to the preamble of claim 1 and a wearable suit according to the preamble of independent claim 8 for assisting muscular power, comprising an intention recognition unit configured to determine a movement intention of a wearer; a control unit configured to generate an actuation control signal to an actuation unit by the signal from the intention recognition unit; and a flexible actuation unit configured to generate actuation force for assisting muscular power by the actuation control signal from the control unit.

### SUMMARY

According to an embodiment of the present invention, a method of controlling a wearable suit including a muscular strength assistance unit, at least a portion of which is made of a shape memory alloy material, according to claim 1 is provided.

According to another embodiment of the present invention, a wearable suit configured to assist muscular strength of a user to move a heavy load according to claim 8 is provided.

### BRIEF DESCRIPTION OF THE DRAWINGS

FIG. 1 is a diagram illustrating a configuration of a wearable suit according to an embodiment of the present disclosure.
FIG. 2 is a diagram illustrating an appearance of a user wearing the wearable suit according to an embodiment of the present disclosure.
FIG. 3 is a diagram illustrating a fixing unit according to another embodiment of the present disclosure.
FIG. 4 is a block configuration diagram of the wearable suit according to an embodiment of the present disclosure.
FIG. 5 is a diagram illustrating a wearable suit provided with a first guiding member according to an embodiment of the present disclosure.
FIG. 6 is a diagram illustrating a wearable suit provided with a second guiding member according to an embodiment of the present disclosure.
FIG. 7 is a diagram illustrating a wearable suit provided with a third guiding member according to an embodiment of the present disclosure.
FIGS. 8A and 8B illustrate various embodiments of a legs connecting unit according to the present disclosure.
FIGS. 9A and 9B illustrate an operating principle of the wearable suit according to an embodiment of the present disclosure.
FIGS. 10A and 10B illustrate an operating principle of a muscular strength assistance unit according to an embodiment of the present disclosure.
FIG. 11 is a diagram illustrating a switch and a signal transmission unit according to an embodiment of the present disclosure.
FIGS. 12A, 12B and 12C illustrate a display unit according to an embodiment of the present disclosure.
FIG. 13 is a graph illustrating characteristics of a shape memory alloy.
FIGS. 14A, 14B and 14C illustrate an operating principle of a sensing unit according to an embodiment of the present disclosure.
FIG. 15 is a flowchart of a method of controlling a wearable suit according to an embodiment of the present disclosure.
FIG. 16 is a flowchart of a method of controlling a wearable suit according to another embodiment of the present disclosure.
FIG. 17 is a flowchart of a method of controlling a wearable suit according to another embodiment of the present disclosure.

### DETAILED DESCRIPTION

According to an embodiment, a user of a wearable suit, by operating the wearable suit using a switch disposed on a forearm (e.g., wrist), can use both hands freely.

According to an embodiment, by being operated by a switch disposed on a user's forearm (e.g., wrist), a wearable suit can be operated according to a user's intention.

An operation of a wearable suit according to an embodiment can be cancelled based on a preset operating time of a user, and thus, be cancelled according to a user's intention even when the user is holding an object in both hands.

An operation of a wearable suit according to an embodiment can be cancelled based on information on a load acting on a connecting unit, and thus, be cancelled according to a user's intention without a switch, a sensor installed in a workspace, or the like.

The aspects of the present disclosure are not limited to the foregoing, and other aspects not mentioned herein will be clearly understood by those skilled in the art through the following descriptions.

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components.

When it is mentioned that any component is "connected" or "coupled" to another component, it is to be understood that any component may be directly connected or coupled to another component or is connected or coupled to another component with the other component interposed therebetween.

Throughout the present specification, unless explicitly described to the contrary, "including" or "comprising" any components will be understood to imply the inclusion of other elements rather than the exclusion of any other elements.

A term "~unit," "module," or the like, described in the specification means a unit of processing at least one function or operation and may be implemented by hardware or software or a combination of hardware and software.

Unless otherwise stated, it should be noted that a description of any one embodiment may be applied to other embodiments as well.

The description of the present disclosure to be disclosed below with the accompanying drawings is intended to describe exemplary embodiments of the present disclosure, and is not intended to represent the only embodiments in which the present disclosure may be practiced.

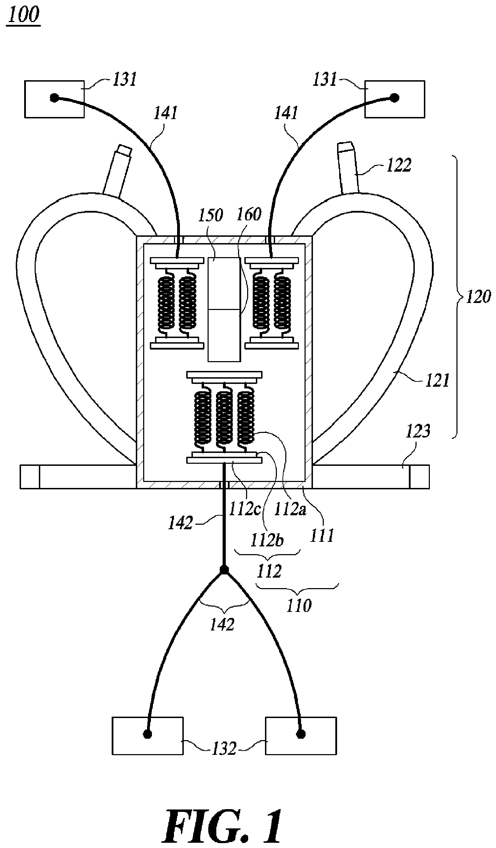

FIG. 1 is a diagram illustrating a configuration of a wearable suit according to an embodiment of the present disclosure.

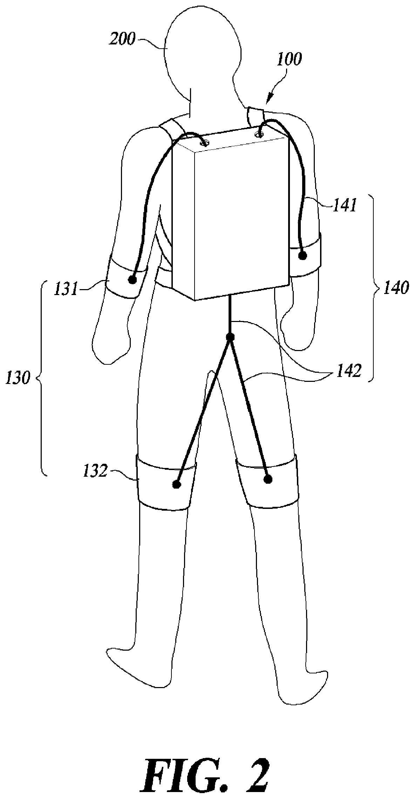

FIG. 2 is a diagram illustrating an appearance of a user wearing the wearable suit according to an embodiment of the present disclosure.

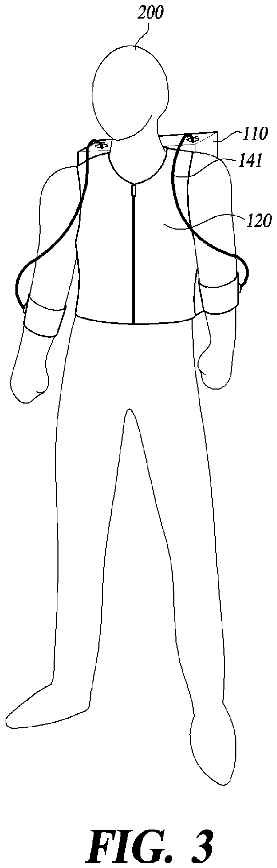

FIG. 3 is a diagram illustrating a fixing unit according to another embodiment of the present disclosure.

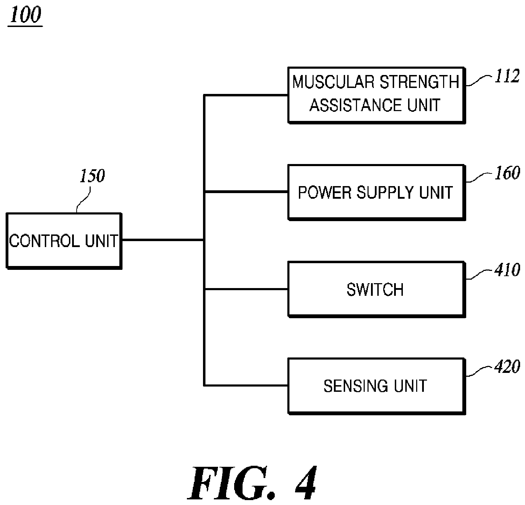

FIG. 4 is a block configuration diagram of the wearable suit according to an embodiment of the present disclosure.

Referring to FIGS. 1 to 4, a wearable suit 100 according to an embodiment of the present disclosure may include a body unit 110, a fixing unit 120, a coupling unit 130, a connecting unit 140, a control unit, 150, and a power supply unit 160.

The body unit 110 may include a housing 111 and a muscular strength assistance unit 112.

The muscular strength assistance unit 112 may include a muscular strength assistance spring 112a, a terminal 112b, and a support member 112c.

The fixing unit 120 may include a shoulder belt 121, a chest belt 122 and a waist belt 123.

The coupling unit 130 may include an arms coupling unit 131 and a legs coupling unit 132.

The connecting unit 140 may include an arms connecting unit 141 and a legs connecting unit 142.

The body unit 110 is disposed on at least a portion of an upper body of a user 200. The body unit 110 may be disposed at a rear of the upper body of the user 200. At least a portion of the body unit 110 is made of a shape memory alloy material. The body unit 110 may be connected to at least a portion of the fixing unit 120. The body unit 110 may be connected to the shoulder belt 121 and the waist belt 123. The body unit 110 is connected to the connecting unit 140. The body unit 110 is connected to the coupling unit 130 using the connecting unit 140. The control unit 150 may control the body unit 110 so that the body unit 110 may be operated and the operation of the body unit 110 may be cancelled.

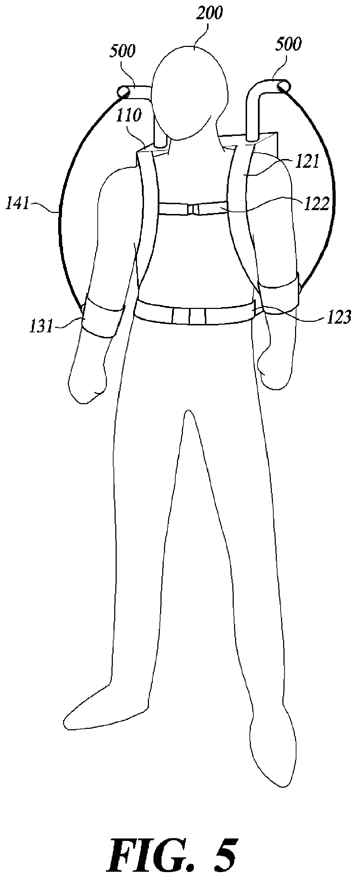

The housing 111 is disposed on at least a portion of the upper body of the user 200. The housing 111 may include an accommodating space therein. The muscular strength assistance unit 112, the control unit 150, the power supply unit 160, guiding units 500, 600, and 700 (see FIGS. 5 to 7) and at least a part of the connecting unit 140 may be disposed in the accommodation space inside the housing 111. The housing 111 and the shoulder belt 121 may be formed in the shape of a backpack.

The muscular strength assistance unit 112 is configured to assist the muscular strength of the user 200. The muscular strength assistance unit 112 may be disposed inside the housing 111. At least a portion of the muscular strength assistance unit 112 is made of a shape memory alloy material. At least a portion of the muscular strength assistance unit 112 may contract and expand. Power may be applied to the muscular strength assistance unit 112 by the power supply unit 160. At least a portion of the muscular strength assistance unit 112 is connected to the connecting unit 140. The muscular strength assistance unit 112 may be connected to the coupling unit 130 using the connecting unit 140. There may be a plurality of muscular strength assistance units 112. The muscular strength assistance unit 112 may be controlled by the control unit 150.

The muscular strength assistance spring 112a is made of a shape memory alloy material. The muscular strength assistance spring 112a is formed to be contractible and expandable. The muscular strength assistance spring 112a may be disposed inside the housing 111. The muscular strength assistance spring 112a may be electrically connected to the terminal 112b. The muscular strength assistance spring 112a may be connected to a support member 112c. As the muscular strength assistance spring 112a contracts or expands, the terminal 112b and the support member 112c may move.

The muscular strength assistance spring 112a may contract and expand using power supplied from the power supply unit 160. Heat is generated by the power applied to the muscular strength assistance spring 112a and the electrical resistance of the muscular strength assistance spring 112a. As the temperature of the muscular strength assistance spring 112a increases, the muscular strength assistance spring 112a contracts. As the power supplied to the muscular strength assistance spring 112a is cut off, the muscular strength assistance spring 112a may be cooled.

There may be a plurality of muscular strength assistance springs 112a. A plurality of muscular strength assistance springs 112a may be disposed in series and/or parallel to each other. In this case, the plurality of muscular strength assistance springs 112a may be disposed in an appropriate shape in consideration of the resistance of the muscular strength assistance spring 112a and/or the power supplied from the power supply unit 160.

In this way, when the muscular strength assistance spring 112a, which can be made of a shape memory alloy material, is used as a driving source for the wearable suit 100, compared to the case where a motor is used as the driving source, the muscular strength of the user 200 may be assisted with a simple configuration, weight of the wearable suit 100 may be reduced, it may be advantageous in terms of cost, and noise caused by the driving of the motor, etc. may be reduced.

Specifically, when the motor is used as the driving source, a reducer for changing a rotation of the motor into a linear motion or a slow angular motion is additionally required. When the muscular strength assistance spring 112a is used as the driving source for the wearable suit 100, since an additional configuration such as the reducer is not required, the muscular strength of the user 200 may be assisted with a relatively simple configuration.

A typical motor that produces an output of about 150W has a weight of about 3 kg, and as described above, a separate reducer is required. On the other hand, when the muscular strength assistance spring 112a is used as the driving source for the wearable suit 100, the muscular strength assistance spring 112a can be configured with a weight of about 300 g to produce a similar output, and additional configurations such as the reducer are unnecessary. Accordingly, it is possible to significantly reduce the weight of the wearable suit 100.

In order to produce the motor, core processes such as winding, fusion bonding, and inspection are required and cannot be done manually, so process development and specialized production lines are required. In addition, the price of the shape memory alloy is lower than that of a magnetic material (e.g., neodymium), copper, and the like, which are core parts of the motor. Accordingly, when the muscular strength assistance spring 112a is used as the driving source of the wearable suit 100, the need for process development and a professional production line is eliminated, manufacturing cost is reduced, and economic feasibility can be improved.

AC, DC motors, etc. require a brush that supplies electricity to a rotor, and due to such configurations the lifespan of the AC, DC motors, etc. is limited and the size of the AC, DC motors, etc. is increased. To compensate for the above problem, even if a brushless motor is considered, it is necessary to develop a dedicated brushless motor for application to a specific field (e.g., wearable suit, etc.). To this end, cost and professional manpower (e.g., doctoral level manpower, etc.) are required. In addition, a separate controller is essential for the brushless motor, and even if the development of a dedicated motor is successful, a demand of 500,000 units or more per year of 100W to 500W class motors for application to wearable suit 100, etc. is needed to minimize cost. On the other hand, when the muscular strength assistance spring 112a is used as the driving source for the wearable suit 100, since additional components such as brushes are not required, the lifespan is not limited and the size of the driving source may be reduced. In addition, since it is not necessary to separately develop a dedicated driving source, the cost and manpower are reduced.

The terminal 112b may be formed on the support member 112c. The terminal 112b may be electrically connected to the muscular strength assistance spring 112a. The terminal 112b may be electrically connected to the power supply unit 160. The terminal 112b may transmit the power supplied from the power supply unit 160 to the muscular strength assistance spring 112a. The terminal 112b may be connected to the muscular strength assistance spring 112a and the support member 112c. As the muscular strength assistance spring 112a contracts or expands, the terminal 112b may move along with the support member 112c. The terminal 112b may be disposed inside the housing 111.

The support member 112c may be connected to the muscular strength assistance spring 112a and the terminal 112b to support the muscular strength assistance spring 112a and the terminal 112b. The support member 112c may be disposed on both sides of the muscular strength assistance spring 112a. The support member 112c may be disposed inside the housing 111. A terminal 112b may be formed on the support member 112c. There may be a plurality of support members 112c. Some of the plurality of support members 112c may be connected to the connecting unit 140. The support member 112c connected to the connecting unit 140 may move as the muscular strength assistance spring 112a contracts or expands and assist the muscular strength of the user 200. Another portion of the plurality of support members 112c may be fixed to the inside of the housing 111. For example, at least some of the plurality of support members 112c to be connected to the connecting unit 140 are movably installed with respect to the housing 111, and at least a portion not connected to the connecting unit 140 may be installed to be fixed to the housing 111.

The fixing unit 120 fixes the body unit 110 to the upper body of the user 200. At least a portion of the fixing unit 120 may be connected to the housing 111. The fixing unit 120 may include one or more of a shoulder belt 121, a chest belt 122, a waist belt 123, and a legs belt.

The shoulder belt 121 fixes the body unit 110 to the upper body of the user 200. When the user 200 wears the wearable suit 100, the shoulder belt 121 may be configured to cover the shoulder of the user 200. Both sides of the shoulder belt 121 may be connected to the housing 111. At least a portion of the chest belt 122 may be connected to the shoulder belt 121.

The chest belt 122 fixes the body unit 110 to the upper body of the user 200. When the user 200 wears the wearable suit 100, the chest belt 122 may be configured to cover the chest of the user 200. At least a portion of the chest belt 122 may be connected to the shoulder belt 121. A middle portion of the chest belt 122 may be formed in a structure that can be coupled and decoupled.

The waist belt 123 fixes the body unit 110 to the upper body of the user 200. When the user 200 wears the wearable suit 100, the waist belt 123 may be configured to cover the waist of the user 200. Both sides of the waist belt 123 may be connected to the housing 111. A middle portion of the waist belt 123 may be formed in a structure that can be coupled and decoupled. According to the waist belt 123, the body unit 110 may be stably maintained in a state positioned on the upper body of the user 200. Meanwhile, it should be noted that, even when the waist belt 123 is not provided, the body unit 110 may be positioned on the upper body of the user 200 by the fixing force of the legs belt, which will be described later, or by the weight of the body unit 110, and the shoulder belt 121.

The legs belt may fix the body unit 110 to the upper body of the user 200. When the wearable suit 100 assists the muscular strength of the arms of the user 200, the legs belt fixes the body unit 110 to the upper body of the user 200. In this case, the legs coupling unit 132 and the legs connecting unit 142 may serve as the legs belt. Meanwhile, when the wearable suit 100 assists only the arms of the user 200, the legs belt may be omitted.

As illustrated in FIG. 3, the fixing unit 120 may be provided in the form of a vest. It may be understood that the fixing unit 120 in the form of the vest is formed integrally with two or more of the shoulder belt 121, the chest belt 122, and the waist belt 123. For example, the fixing unit 120 may also be formed in a shape in which the left and right shoulder belts 121 are interconnected by a fastening means, for example, a zipper or a button.

The coupling unit 130 is coupled to at least a portion of the body of the user 200. The coupling unit 130 may be coupled to at least a portion of the arms and/or legs of the user 200. The coupling unit 130 may be connected to the body unit 110 by a connecting unit 140. The coupling unit 130 may be connected to the muscular strength assistance unit 112 to assist the muscular strength of the user 200. The number of coupling units 130 may be plural. The coupling unit 130 may be formed in a band shape.

The arms coupling unit 131 is coupled to at least a portion of the arms of the user 200. The arms coupling unit 131 may be connected to the muscular strength assistance unit 112 by the arms connecting unit 141 and assist the muscular strength of the arms of the user 200.

The legs coupling unit 132 is coupled to at least a portion of the legs of the user 200. The legs coupling unit 132 may be connected to the muscular strength assistance unit 112 by the legs connecting unit 142 and assist the muscular strength of the legs and/or waist of the user 200. When the wearable suit 100 assists the muscular strength of the arms of the user 200, the legs coupling unit 132 may constitute a portion of the legs belt.

The connecting unit 140 connects the body unit 110 and the coupling unit 130. The connecting unit 140 connects the muscular strength assistance unit 112 and the coupling unit 130. At least a portion of the connecting unit 140 may move as the muscular strength assistance spring 112a contracts or expands. The connecting unit 140 may be made of a non-stretchable material. For example, at least a portion of the connecting unit 140 may be made of a polyester material. A thickness of the connecting unit 140 may be 8 mm to 10 mm. By inserting at least a portion of the connecting unit 140 into the inside of the guiding members 500, 600, and 700 (see FIGS. 5 to 7), the position of the connecting unit 140 may be guided and/or fixed.

The arms connecting unit 141 connects the body unit 110 and the arms coupling unit 131. The arms connecting unit 141 connects the muscular strength assistance unit 112 and the arms coupling unit 131. As the muscular strength assistance spring 112a contracts or expands, at least a portion of the arms connecting unit 141 may move to assist the muscular strength of the arms of the user 200.

Meanwhile, it should be noted that when the wearable suit 100 is provided to assist the muscular strength of the legs and/or the waist of the user 200, the arms coupling unit 131 and the arms connecting unit 141 may be omitted.

The legs connecting unit 142 connects the body unit 110 and the legs coupling unit 132. The legs connecting unit 142 connects the muscular strength assistance unit 112 and the legs coupling unit 132. As the muscular strength assistance spring 112a contracts or expands, at least a portion of the legs connecting unit 142 may move to assist the muscular strength of the legs and/or waist of the user 200. When the wearable suit 100 assists the muscular strength of the arms of the user 200, the legs connecting unit 142 may constitute a portion of the legs belt. The legs connecting unit 142 may be formed in a "Y" shape, an "H" shape, etc. The legs connecting unit 142 may be formed integrally, but is not necessarily limited thereto, and may be formed in a shape in which a plurality of components are combined according to the purpose and use.

Meanwhile, it should be noted that, when the wearable suit 100 is provided to assist the muscular strength of the arms of the user 200, the legs coupling unit 132 and the legs connecting unit 142 may be omitted.

The control unit 150 may control each configuration of the wearable suit 100. The control unit 150 may be disposed inside the housing 111. The control unit 150 may receive information obtained by a sensing unit 420. The control unit 150 may receive a signal related to the operation or the operation cancellation from a timer and/or a switch 410, etc. The control unit 150 may control the power supply unit 160 based on the information obtained by the sensing unit 420. The control unit 150 may control the body unit 110 using the power supply unit 160.

The control unit 150 may receive an operation signal of the wearable suit 100 from the switch 410. The control unit 150 may operate the wearable suit 100 based on a signal transmitted from the switch 410. In this case, the control unit 150 may operate the wearable suit 100 by controlling the power supply unit 160 to supply power from the power supply unit 160 to the muscular strength assistance unit 112.

The control unit 150 may cancel the operation of the wearable suit 100 based on the information transmitted from the timer and/or the sensing unit 420. In this case, the control unit 150 may cancel the operation of the wearable suit 100 by controlling the power supply unit 160 to cut off the power supplied from the power supply unit 160 to the muscular strength assistance unit 112. The control unit 150 may cancel the operation of the wearable suit 100 based on the information transmitted from the timer, etc. The control unit 150 may cancel the operation of the wearable suit 100 based on information on a load (i.e., a load of an object to be moved by the user) acting on the wearable suit 100. The control unit 150 may cancel the operation of the wearable suit 100 based on whether the load acting on the connecting unit 140 decreases and/or whether the load reduction time is equal to or longer than a preset time, etc.

The power supply unit 160 may be electrically connected to at least a portion of the muscular strength assistance unit 112 to supply power to the muscular strength assistance unit 112. The power supply unit 160 may be electrically connected to the terminal 112b. The power supply unit 160 may be disposed inside the housing 111. Heat is generated by the power supplied from the power supply unit 160 and the electrical resistance of the muscular strength assistance spring 112a, and the temperature of the muscular strength assistance spring 112a increases. Accordingly, the muscular strength assistance spring 112a contracts to provide tension to the connecting unit 140, thereby assisting the muscular strength of the body part of the user equipped with the coupling unit 130, for example, the arms, waist, and/or legs. The power supply unit 160 may be controlled by the control unit 150 to supply or cut off power to the muscular strength assistance unit 112.

FIG. 5 is a diagram illustrating a wearable suit provided with a first guiding member according to an embodiment of the present disclosure.

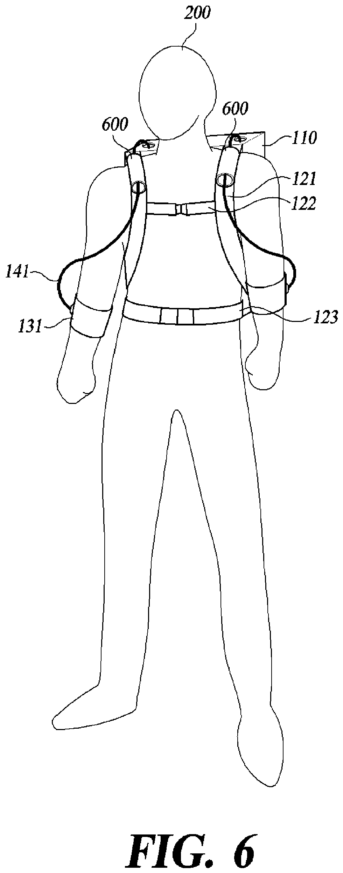

FIG. 6 is a diagram illustrating a wearable suit provided with a second guiding member according to an embodiment of the present disclosure.

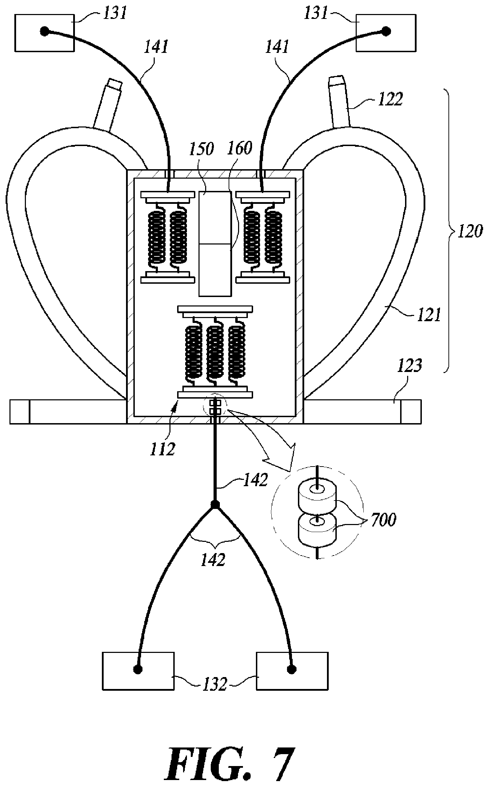

FIG. 7 is a diagram illustrating a wearable suit provided with a third guiding member according to an embodiment of the present disclosure.

A guiding unit according to an embodiment of the present disclosure will be described in detail with reference to FIGS. 5 to 7.

The wearable suit 100 according to the present disclosure may further include a guiding unit configured to guide the location of the connecting unit 140. According to the guiding unit, by moving the connecting unit 140 along a set path, it is possible to further improve the control accuracy.

The guiding unit may include one or more guiding members 500, 600, and 700 configured to insert at least a portion of the connecting unit 140.

The guiding members 500, 600, and 700 may include a first guiding member 500, a second guiding member 600, and a third guiding member 700. FIGS. 5 to 7 illustrate each of the guiding members 500, 600, and 700 by way of example, but those skilled in the art will understand that the wearable suit 100 may include two or more guiding members 500, 600, and 700 together.

The first guiding member 500 may guide and/or fix the position of the arms connecting unit 141. The first guiding member 500 is configured to accommodate at least a portion of the arms connecting unit 141. By preventing the arms connecting unit 141 from coming into direct contact with the body of the user 200, the first guiding member 500 may prevent the user 200 from being injured while the arms connecting unit 141 moves. One side of the first guiding member 500 toward the upper side and/or the front of the user 200 from the housing 111 may be connected to the housing 111. For example, as illustrated in FIG. 5, based on the state in which the user 200 wears the wearable suit 100, the first guiding member 500 may have a shape extending from the housing 111 toward the upper side and/or the front of the user 200. Based on the state in which the user 200 wears the wearable suit 100, a portion of the first guiding member 500 extends from the housing 111 toward the upper side of the user 200, and the remaining portion of the first guiding member 500 may extend from one portion in a direction toward the front of the user 200. According to the first guiding member 500, it is possible to reduce the problem that the load due to the tension applied to the arms connecting unit 141 is concentrated on the shoulder of the user 200.

The first guiding member 500 may be formed in a pipe shape having a hollow into which at least a portion of the arms connecting unit 141 can be inserted. According to such a shape, it is possible to guide the position of the arms connecting unit 141 more stably. On the other hand, alternatively, the first guiding member 500 may have a groove shape with an opened upper side. At least a portion of the first guiding member 500 may be curved so that the load acting on the first guiding member 500 and/or the arms connecting unit 141 is distributed. For example, an end of the first guiding member 500 may have a downwardly curved shape. According to such a shape, it is possible to reduce the problem that the arms connecting unit 141 is damaged by friction with the end of the first guiding member 500. The number of first guiding members 500 may be plural.

The second guiding member 600 may guide and/or fix the position of the arms connecting unit 141. The second guiding member 600 is configured to accommodate at least a portion of the arms connecting unit 141. The second guiding member 600 may be coupled to at least a portion of the fixing unit 120. The second guiding member 600 may be coupled to at least a portion of the shoulder belt 121. For example, the second guiding member 600 may be integrally formed with the fixing unit 120 (e.g., shoulder belt 121) in the form of a passage formed to pass through the fixing unit 120 (e.g., the shoulder belt 121). The second guiding member 600 may be formed in a pipe or ring shape. On the other hand, the second guiding member 600 may have a groove shape with an opened upper side. At least a portion of the second guiding member 600 may be curved so that the load acting on the second guiding member 600 is distributed. The number of second guiding members 600 may be plural.

The third guiding member 700 may guide and/or fix the position of the legs connecting unit 142. The third guiding member 700 is configured so that at least a portion of the legs connecting unit 142 is inserted therein. The third guiding member 700 may be disposed inside the housing 111. The third guiding member 700 may be fixed inside the housing 111. The third guiding member 700 may be formed in a pipe or ring shape. The number of third guiding members 700 may be plural.

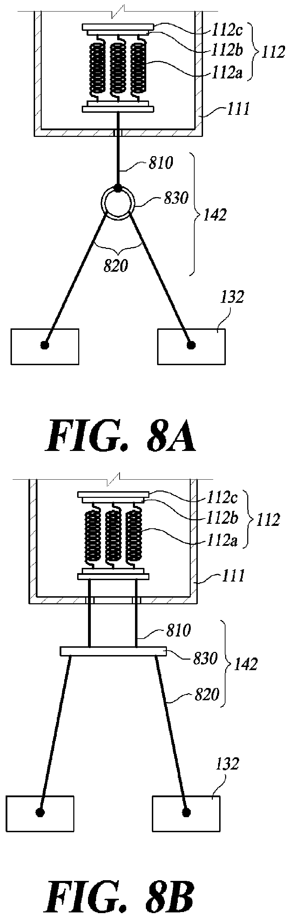

FIGS. 8A and 8B illustrate various embodiments of a legs connecting unit according to the present disclosure.

Referring to FIGS. 8A and 8B, the legs connecting unit 142 according to the embodiment of the present disclosure may include a first legs connecting unit 810, a second legs connecting unit 820, and a third legs connecting unit 830.

One side of the first legs connecting unit 810 is connected to the body unit 110. One side of the first legs connecting unit 810 may be connected to the support member 112c of the muscular strength assistance unit 112. As the muscular strength assistance spring 112a contracts or expands, at least a portion of the first legs connecting unit 810 may move together with the support member 112c. The other side of the first legs connecting unit 810 may be connected to the third legs connecting unit 830. The first legs connecting unit 810 may be connected to the second legs connecting unit 820 by the third legs connecting unit 830. A cross section of the first legs connecting unit 810 may have a circular shape. The first legs connecting unit 810 may be made of a polyester material. The number of first legs connecting units 810 may be plural. According to the purpose and use, the first legs connecting unit 810 may be formed in various lengths.

One side of the second legs connecting unit 820 is connected to the legs coupling unit 132. The other side of the second legs connecting unit 820 may be connected to the third legs connecting unit 830. The second legs connecting unit 810 may be connected to the first legs connecting unit 810 by the third legs connecting unit 830. The second legs connecting unit 820 may be made of a polyester material. The second legs connecting unit 820 may have a shape wider than the thickness. According to such a shape, based on the state in which the user 200 is seated in a chair to rest, by reducing a thickness of a portion of the legs connecting unit 142 that is in contact with the body (e.g., waist, buttocks, and/or thigh) of the user 200, it is possible to sufficiently secure the rigidity of the second legs connecting unit 820 while reducing discomfort during seating. For example, the second legs connecting unit 820 may be formed in a thin and flat shape (e.g., webbing belt shape) similar to a seat belt of a vehicle. The number of second legs connecting units 820 may be plural., the second legs connecting unit 820 may be formed in various lengths according to the purpose and use.

The third legs connecting unit 830 is disposed between the first legs connecting unit 810 and the second legs connecting unit 820. The third legs connecting unit 830 connects the other side of the first legs connecting unit 810 and the other side of the second legs connecting unit 820. The third legs connecting unit 830 may support and/or fix the first legs connecting unit 810 and the second legs connecting unit 820. The third legs connecting unit 830 may be formed in a ring or bar shape.

For example, as illustrated in FIG. 8A, when the third legs connecting unit 830 is formed in a ring shape, according to such a structure, the structure is simple, and the left-right balance of a pair of second legs connecting unit 820 may be improved. For example, the second legs connecting unit 820 may be installed in the third legs connecting unit 830 to be movable along the circumference of the third legs connecting unit 830.

For example, as illustrated in FIG. 8B, when the third legs connecting unit 830 is formed in a bar shape, by separating a pair of second legs connecting unit 820 by a sufficient enough distance, the second legs connecting unit 820 may reduce the portion in contact with the user's buttocks. In addition, by reducing the angle formed by the second legs connecting unit 820 with respect to the transmission direction of the force from the muscular strength assistance unit 112 to the legs coupling unit 132, the efficiency of transmitting the force may be improved.

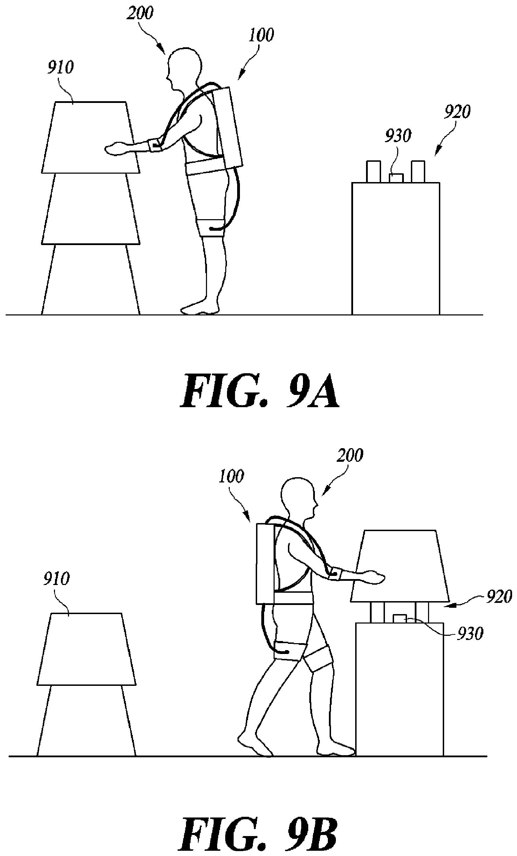

FIGS. 9A and 9B illustrate an operating principle of the wearable suit according to the embodiment of the present disclosure.

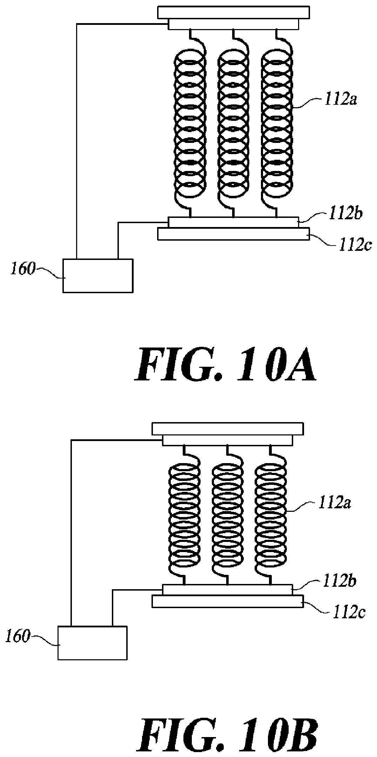

FIGS. 10A and 10B illustrate an operating principle of a muscular strength assistance unit according to an embodiment of the present disclosure.

An operating principle of the wearable suit 100 according to an embodiment of the present disclosure will be described with reference to FIGS. 9 and 10.

The user 200 wearing the wearable suit 100 approaches an object, for example, a heavy load 910 to move the heavy load 910 to a moving location such as a worktable 920. The user 200 may extend the user's arms or bend the user's waist to lift the heavy load 910. Accordingly, the muscular strength assistance spring 112a made of a shape memory alloy material expands. The user 200 may transmit an operation signal of the wearable suit 100 to the control unit 150 using the switch 410 or the like. The control unit 150 controls the power supply unit 160 so that power is supplied from the power supply unit 160 to the muscular strength assistance unit 112. Heat is generated by the power supplied from the power supply unit 160 and the electrical resistance of the muscular strength assistance spring 112a. As the temperature of the muscular strength assistance spring 112a increases, the muscular strength assistance spring 112a contracts. As the muscular strength assistance spring (112a) contracts, it is possible to assist the muscular strength of the user's body connected to the muscular strength assistance unit 112. As a result, the user 200 may move the heavy load 910 to a moving location such as the worktable 920 with a small force.

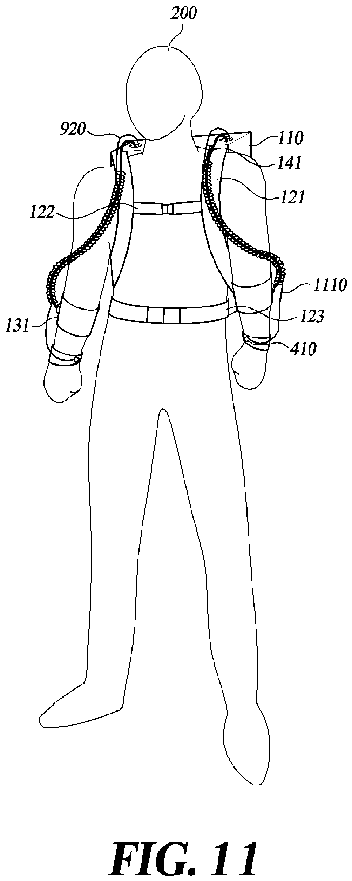

FIG. 11 is a diagram illustrating a switch and a signal transmission unit according to an embodiment of the present disclosure.

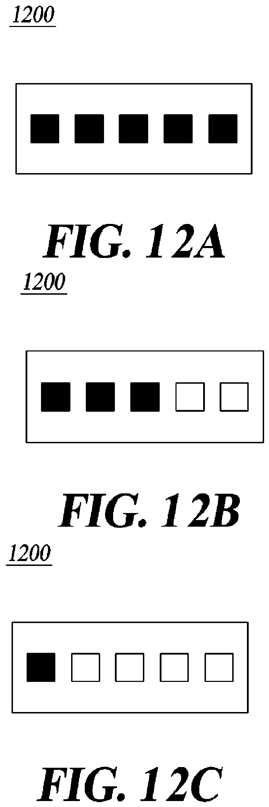

FIGS. 12A, 12B and 12C illustrate a display unit according to an embodiment of the present disclosure.

Referring to FIGS. 11 and 12, the wearable suit 100 according to an embodiment of the present disclosure may further include the switch 410, a signal transmission unit 1110, and a display unit 1200.

The switch 410 may generate an electrical signal by detecting contact with an external object (or another switch 410). For example, the switch 410 may include a conductive exposed portion. When the conductive exposed portions of the two switches 410 come into contact with each other, the two switches 410 are electrically connected, so the control unit 150 may detect the contact. The switch 410 may be disposed on at least a portion of the arms of the user 200.

As an example, the switch 410 may include a wearing member that may be worn on at least a portion of the arms of the user 200. For example, the wearing member may be worn on the forearm of the user 200. For example, as illustrated in FIG. 11, the wearing member is provided in the shape of a wrist band, so that at least two switches 410 may be disposed on the inside of both wrists of the user 200.

As another example, it should be noted that the switch 410 may be disposed in the arms coupling unit 131, instead of having a separate wearing member. In other words, when the wearable suit 100 includes the arms coupling unit 131, the arms coupling unit 131 may also function as the wearing member of the switch 410. In other words, according to the embodiment, the "wearing member" may be understood to refer to the arms coupling unit 131.

The user 200 may input an operation signal of the wearable suit 100 using the switch 410.

For example, the user 200 may input the operation signal of the wearable suit 100 by bringing the two switches 410 disposed on both forearms (e.g., wrist) into contact with each other. Since both forearms (e.g., wrist), in particular, the inner sides of both forearms, are portions that are unlikely to come into contact with each other in a daily work environment, using such a structure, it is possible to effectively prevent the problems due to the malfunction of the switch 410.

As another example, the user 200 may input the operation signal of the wearable suit 100 by bringing the switch 410 into contact with the heavy load 910 (refer to FIG. 9).

The user 200 may input the operation signal of the wearable suit 100 by combining the methods according to the abovementioned two examples. That is, the user 200 may input the operation signal by bringing the two switches 410 disposed on both forearms into contact with each other or bringing the switch 410 and the heavy load 910 into contact with each other.

In this way, the user 200 may input the operation signal of the wearable suit 100 using the switch 410 disposed on the wrist, so the user can use both hands freely and operate the wearable suit 100 according to the user's intention. In addition, unlike the case of using the motor, etc., since standby power is unnecessary, it is possible to reduce power consumption.

The operation signal may be transmitted from the switch 410 to the control unit 150. The control unit 150 may operate the wearable suit 100 or cancel the operation of the wearable suit 100 based on the signal transmitted from the switch 410.

The switch 410 may transmit a signal to the control unit 150 using a wireless and/or wired method. For example, the switch 410 may transmit a signal to the control unit 150 using a wireless communication method. Here, the wireless communication method may be a Bluetooth method, but is not limited thereto, and other methods may be used according to the purpose and use. As another example, the switch 410 may transmit a signal to the control unit 150 using the signal transmission unit 1110.

The signal transmission unit 1110 connects the switch 410 and the control unit 150. The signal transmission unit 1110 transmits a signal input to the switch 410 to the control unit 150. The signal transmission unit 1110 may be arranged such that at least a portion winds the connecting unit 140, in particular, the arms connecting unit 141, for example, in a spring shape. With such a disposition structure, even if the connecting unit 140 moves or the length of the connecting unit 140 changes, the signal transmission unit 1110 itself contracts and expands to accommodate the change, thereby stably transmitting a signal.

The control unit 150 may receive the operation signal of the wearable suit 100 from the switch 410. The control unit 150 may receive a signal from the switch 410 using a wireless and/or wired method.

The control unit 150 may determine whether at least two switches 410 come into contact with each other based on the signal transmitted from the switch 410. When at least two switches 410 come into contact with each other, the control unit 150 may determine that the operation signal of the wearable suit 100 is input.

The control unit 150 may determine whether the switch 410 and the heavy load 910 (refer to FIG. 9) come into contact with each other based on the signal transmitted from the switch 410. For example, the control unit 150 may determine whether the operation signal of the wearable suit 100 is input according to whether the switch 410 and the heavy load 910 come into contact with each other a set number of times within a set amount of time.

As an example, the control unit 150, when each signal generated from the at least two switches 410 is transmitted to the control unit 150 (i) simultaneously, or (ii) sequentially within a set time, it may be detected that two switches 410 come into contact with both sides of the heavy load 910 at the same time, and it may be determined that the operation signal of the wearable suit 100 is input.

As another example, when the switch 410 and the heavy load 910 come into contact with each other plural times by a set number of times within a set time, the control unit 150 may determine whether the operation signal of the wearable suit 100 is input. By setting the set time to a sufficiently short time, it is possible to prevent the wearable suit 100 from malfunctioning when the switch 410 touches an object other than the heavy load 910, for example, the thigh of the user 200, and the like. For example, the set time may be 1 second, and the set number of times may be twice, but is not limited thereto and may be set to a different value according to the purpose and use. When at least two switches 410 come into contact with both sides of the heavy load 910 at the same time, the control unit 150 may determine that the operation signal of the wearable suit 100 is input.

When it is determined that the operation signal of the wearable suit 100 is input, the control unit 150 controls the power supply unit 160 so that power is supplied from the power supply unit 160 to the muscular strength assistance unit 112, thereby operating the wearable suit 100.

The control unit 150 may heat the muscular strength assistance unit 112 so that the muscular strength assistance spring 112a contracts to provide an auxiliary force to the user 200. The control unit 150 may heat the muscular strength assistance unit 112 by controlling the power supply unit 160 to supply power from the power supply unit 160 to the muscular strength assistance unit 112.

The control unit 150 may cool the muscular strength assistance unit 112 to reduce the auxiliary force. The control unit 150 may cool the muscular strength assistance unit 112 by controlling the power supply unit 160 to cut off power from the power supply unit 160 to the muscular strength assistance unit 112.

The control unit 150 may receive information on whether the user 200 approaches a moving location of the heavy load 910 from a proximity sensor 930 (see FIG. 9) installed in the moving location of the heavy load 910 (see FIG. 9). Here, the proximity sensor 930 may be installed in the moving location, such as the worktable 920 (see FIG. 9) to which the heavy load 910 moves. The proximity sensors 930 may be a plurality of proximity sensors, and the proximity sensor 930 may be a radio-frequency identification (RFID) sensor. The control unit 150 may control the wearable suit 100 based on the information transmitted from the proximity sensor 930. For example, when it is determined based on the signal received through the proximity sensor 930 that the user 200 approaches the moving location of the heavy load 910, the control unit 150 may cancel the operation of the wearable suit 100 that the user 200 wears.

The control unit 150 cancels the operation of the wearable suit 100 based on the operating time of the user 200. More specifically, according to the present invention, the control unit 150 cools the muscular strength assistance unit 112 so that the operation of the wearable suit 100 is cancelled based on the operating time of the user 200, wherein the operating time is a preset operating time. Here, the operating time means the time it takes for the user 200 to move the heavy load 910. The user 200 may set the operating time in advance using a dial, a button, or the like. By cancelling the operation of the wearable suit 100 based on a preset operating time of the user 200, it is possible to cancel the operation of the wearable suit 100 according to the intention of the user 200 even when it is difficult to use the switch 410 because the user 200 is holding a heavy load 910 or the like in both hands, or when it is difficult to install the proximity sensor (930, see FIG. 9) etc. due to the continuous change in the moving location of the heavy load 910.

The control unit 150 may receive information on the temperature of the muscular strength assistance unit 112 from a temperature sensor. The control unit 150 may cool the muscular strength assistance unit 112 based on the information transmitted from the temperature sensor. For example, when the temperature of the muscular strength assistance unit 112 is higher than the set temperature because the muscular strength assistance unit 112 is not sufficiently cooled due to the high ambient temperature, the control unit 150 may operate a fan or the like provided to cool the muscular strength assistance unit 112 to rapidly cool the muscular strength assistance unit 112. In this way, the control unit 150 may adjust a cooling rate of the muscular strength assistance unit 112 based on the temperature of the muscular strength assistance unit 112, thereby effectively assisting the operation of the user 200.

The display unit 1200 may display operation information (i.e., the operation state) of the wearable suit 100. Here, the operation information/state includes information as to whether the wearable suit 100 is operating, information as to whether the wearable suit 100 fails, the remaining time until the operation of the wearable suit 100 is cancelled, the temperature of the muscular strength assistance unit 112, and the like.

For example, the display unit 1200 may include the wearing member (e.g., wrist band) to be disposed on the body (e.g., wrist, etc.) of the user 200. As another example, it should be noted that the display unit 1200 may be disposed on a portion of the wearable suit 100 (e.g., the arms coupling unit 131 or the switch 410) instead of having a separate wearing member.

The display unit 1200 may include one or more light emitting diode (LED) lamps. The one or more LED lamps may be configured to emit light of a plurality of colors. By causing the display unit 1200 to display the operation state of the wearable suit 100 using one or more LED lamps, the user 200 may easily understand the operation state while operating.

The display unit 1200 may display different operation states of the wearable suit 100 using light of different colors, for example, red, blue, white, yellow, and green. For example, when the wearable suit 100 is operating normally, the display unit 1200 may display an operation state using light of a first color (e.g., blue). When the wearable suit 100 is turned on but is in a stopped state (i.e., in a standby state), the display unit 1200 may display an operation state using light of a second color (e.g., green). When the wearable suit 100 is in a turned-off state, the display unit 1200 may display an operation state using light of a third color (e.g., white). When the wearable suit 100 fails, etc., the display unit 1200 may display an operation state using light of a fourth color (e.g., yellow). When the cancellation of operation of the wearable suit 100 is imminent, the display unit 1200 may display an operation state using light of a fifth color (e.g., red).

The display unit 1200 may display the operation state of the wearable suit 100 by adjusting a light emitting area. For example, as illustrated in FIG. 12, the display unit 1200 may display the operation state of the wearable suit 100 by adjusting the number of light-emitting light sources (e.g., LED lamps). For example, when the muscular strength assistance unit 112 is heated and contracted to provide an auxiliary force to the user 200, the display unit 1200 turns on all of the plurality of light sources as illustrated in FIG. 12A to display the operation state. When the auxiliary force is decreasing as the muscular strength assistance unit 112 is cooled, the display unit 1200 may display an operation state by turning on some of the plurality of light sources as illustrated in FIG. 12B. The display unit 1200 may display the operation state by adjusting the number of light sources lit according to the temperature of the muscular strength assistance unit 112 and/or the remaining time until the operation of the wearable suit 100 is cancelled. When the cancellation of the operation of the wearable suit 100 is imminent as the muscular strength assistance unit 112 is cooled, the display unit 1200 may display an operation state by turning on one light source as illustrated in FIG. 12C. When the cancellation of the operation of the wearable suit 100 is imminent, the display unit 1200 flickers one light source emitting a red light to display the operation state, so the user 200 clearly recognizes that the cancellation of the operation of the wearable suit 100 is imminent, thereby efficiently performing the operation. Meanwhile, unlike the above description, the display unit 1200 may display the operation state of the wearable suit 100 by increasing or decreasing an area of a light-emitting region on the same display according to the remaining time until the operation is cancelled.

Meanwhile, the display unit 1200 may combine the above-described display methods, that is, simultaneously use the color, the light emitting area, and the like to display all or some of whether the wearable suit 100 is operating, whether the wearable suit 100 fails, the remaining time until the operation of the wearable suit 100 is cancelled, the temperature of the muscular strength assistance unit 112, and the like. A detailed description thereof will be omitted.

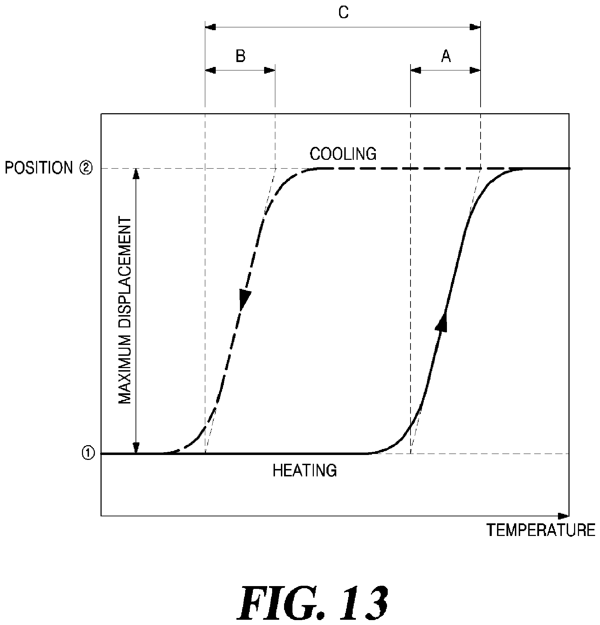

FIG. 13 is a graph illustrating characteristics of a shape memory alloy.

In FIG. 13, an x-axis represents the temperature of the shape memory alloy, and a y-axis represents the position of the shape memory alloy. Hereinafter, the position of the shape memory alloy will be described assuming that it means the position of the other side of the shape memory alloy that moves as the shape memory alloy contracts or expands while one side of the shape memory alloy is fixed. A case in which the shape memory alloy contracts by heating and expands by cooling will be described. In the y-axis of FIG. 13, point ② is displayed above point ①, but this simply shows the absolute position of the other side of the shape memory alloy, and it does not mean that the length of the shape memory alloy is longer at point ② than point ①.

The shape memory alloy is heated or cooled in section C, and contracts or expands accordingly. Specifically, as the shape memory alloy is heated by power and electrical resistance, the temperature increases rapidly, and the shape memory alloy contracts rapidly in section A, so the position of the other side of the shape memory alloy moves from point ① to point ②. As the shape memory alloy cools naturally, the temperature gradually decreases, and the shape memory alloy gradually expands in section B, so the position of the other side of the shape memory alloy moves from point ② to point ①. Here, the temperature of section A may be 40 to 50°C, and the temperature of section B may be 20 to 30°C, but is not necessarily limited thereto, and may be a different value depending on the type and ratio of metals constituting the shape memory alloy.

As described above, by rapidly heating the shape memory alloy using the power, the electrical resistance, and the like, the shape memory alloy may rapidly contract. On the other hand, by cutting off the power supplied to the shape memory alloy and cooling the shape memory alloy naturally, the shape memory alloy may gradually expand. The principle of the expansion and contraction according to the temperature of this shape memory alloy is the same as the working principle of the user 200 of quickly lifting the heavy load 910 (see FIG. 9), and slowly putting down the heavy load 910 on the worktable 920 (see FIG. 9), etc. As a result, it is possible to effectively assist the work of the user 200 using the wearable suit 100 made of the shape memory alloy material.

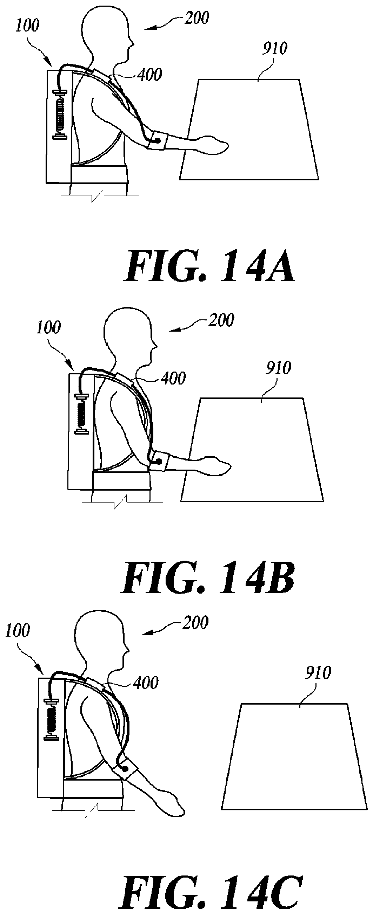

FIGS. 14A, 14B and 14C illustrate an operating principle of a sensing unit according to an embodiment of the present disclosure.

Referring to FIGS. 14A, 14B and 14C, the wearable suit 100 according to the embodiment of the present disclosure may further include a sensing unit 420.

The sensing unit 420 detects a load of an object acting on the wearable suit 100. The sensing unit 420 may transmit the acquired information to the control unit 150. The control unit 150 may control the wearable suit 100 based on the information obtained by the sensing unit 420. The sensing unit 420 may include one or more load sensors. The sensing unit 420 may be disposed on the connecting unit 140 to detect load acting on the connecting unit 140. The sensing unit 420 may detect tension acting on the connecting unit 140. The sensing unit 420 may be disposed in the middle of the connecting unit 140.

The sensing unit 420 may be disposed on the connecting unit 140 to detect loads acting on each of the two sides of the connecting units 140. As the user 200 stretches the user's arms or bends the user's waist to move the heavy load 910, the muscular strength assistance spring 112a expands, and the connecting unit 140 on both sides of the sensing unit 420 is in a loose state. As the user 200 operates the wearable suit 100 to lift the heavy load 910, the muscular strength assistance spring 112a contracts and all the connecting units 140 on both sides of the sensing unit 420 are in a tense state. When the user 200 puts down the heavy load 910 from his/her hand, the load acting on the connecting unit 140 between the sensing unit 420 and the coupling unit 130 is reduced. The sensing unit 420 transmits the information on the load acting on the connecting unit 140 to the control unit 150, and the control unit 150 cancels the operation of the wearable suit 100 based on the information. When the user 200 is holding an object in both hands, there is a problem in that it is difficult to use the switch. According to the above-described structure, the user 200 may cancel the operation of the wearable suit 100 according to the intention of the user 200 without a separately installed switch, etc.

Also, the control unit 150 may cancel the operation of the wearable suit 100 by considering both the operating time of the user 200 and the load acting on the wearable suit 100. For example, even if the operating time of the user 200 is set to 1 second, but 1 second has not passed, when it is clearly detected that the load acting on the connecting unit 140 decreases as the user 200 puts the heavy load 910 down from the hand, the control unit 150 may cancel the operation of the wearable suit 100 to facilitate the work of the user 200. Conversely, even if the operating time of the user 200 is set to 1 second and 1 second has elapsed, when the user 200 is still holding the heavy load 910 and the load acting on the wearable suit 100 is detected, the control unit 150 may not cancel the operation of the wearable suit 100 for the safety of the user 200. The method in which the control unit 150 cancels the operation of the wearable suit 100 by considering the operating time of the user 200 and the load acting on the wearable suit 100 is not limited to the above-described example, and the operating time and the load may be considered in various ways according to the purpose, use, and situation.

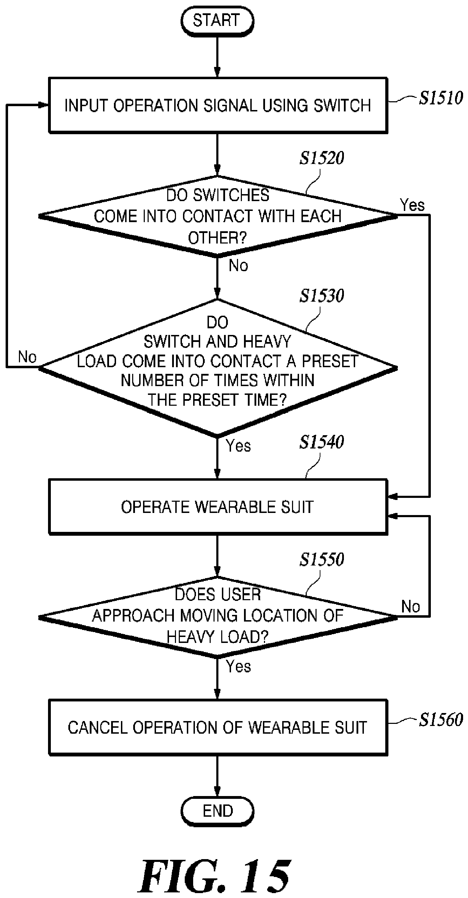

FIG. 15 is a flowchart of a method of controlling a wearable suit according to an embodiment of the present disclosure.

A method of controlling a wearable suit 100 according to the embodiment will be described with reference to FIG. 15.

The user of the wearable suit inputs an operation signal using a switch (S15 10). The user 200 of the wearable suit 100 may input the operation signal of the wearable suit 100 using at least two switches 410 disposed on a wrist. The operation signal is transmitted from the switch 410 to the control unit 150. The control unit 150 may control the wearable suit 100 based on the operation signal.

The control unit determines whether at least two switches come into contact with each other (S1520). The control unit 150 determines whether at least two switches 410 come into contact with each other based on the signal transmitted from the switch 410. When at least two switches 410 come into contact with each other, the control unit 150 determines that the operation signal of the wearable suit 100 is input.

The control unit determines whether the switch and the heavy load come into contact with each other a set number of times within a set amount of time (S1530). The control unit 150 may determine whether the switch 410 and the heavy load 910 come into contact with each other. When the switch 410 and the heavy load 910 come into contact with each other for a number of times equivalent to the set number of times within a set time, the control unit 150 may determine whether the operation signal of the wearable suit 100 is input. In this way, it is possible to prevent the wearable suit 100 from malfunctioning when the switch 410 touches an object other than the heavy load 910, for example, the thigh of the user 200, and the like. Here, the set time may be 1 second, and the set number of times may be twice, but is not limited thereto and may be set to a different value according to the purpose and use. When at least two switches 410 come into contact with both sides of the heavy load 910 at the same time, the control unit 150 may determine that the operation signal of the wearable suit 100 is input. Alternatively, control unit 150 may determine that the operation signal of the wearable suit 100 is input when at least one of switches 410 contacts the heavy load 910.

The control unit operates the wearable suit (S1540). When it is determined that at least two switches 410 come into contact with each other, the control unit 150 operates the wearable suit 100. When it is determined that the switch 410 and the heavy load 910 come into contact with each other a number of times equivalent to the set number of times within a set time, the control unit 150 operates the wearable suit 100.

The control unit determines whether the user approaches the moving location of the heavy load (S1550). The control unit 150 may receive information on whether the user 200 approaches the moving location of the heavy load 910 from the proximity sensor 930 or the like installed in the moving location of the heavy load 910. The control unit 150 controls the wearable suit 100 based on the information received from the proximity sensor 930 and the like.

The control unit cancels the operation of the wearable suit (S 1560). The control unit 150 may cancel the operation of the wearable suit 100 when it is determined that the user 200 approaches the moving location of the heavy load 910.

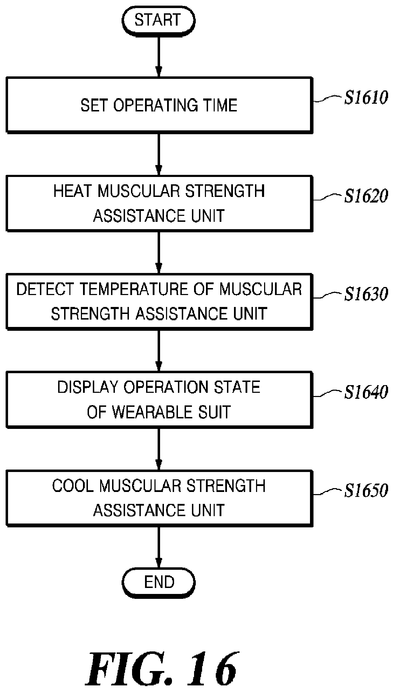

FIG. 16 is a flowchart of a method of controlling a wearable suit according to another embodiment of the present disclosure.

The method of controlling a wearable suit 100 according to another embodiment will be described with reference to FIG. 16.

The user of the wearable suit sets the operating time in advance (S1610). The user 200 may set the operating time by considering the time required to move the heavy load 910 to the moving location such as the worktable 920. The user 200 may set the operating time using a dial, a button, or the like.

The control unit heats the muscular strength assistance unit (S1620). The control unit 150 may heat the muscular strength assistance unit 112 to provide an auxiliary force to the user 200. The control unit 150 may heat the muscular strength assistance unit 112 by controlling the power supply unit 160 to supply power from the power supply unit 160 to the muscular strength assistance unit 112. The muscular strength assistance unit 112 made of the shape memory alloy material contracts as it is heated, and the auxiliary force may be provided to the body part of the user 200 connected to the muscular strength assistance unit 112, for example, arms, legs, and/or waist.

The temperature sensor detects the temperature of the muscular strength assistance unit (S1630). The temperature sensor detects the temperature of the muscular strength assistance unit 112 and transmits information on the temperature of the muscular strength assistance unit 112 to the control unit 150. The control unit 150 may adjust the cooling rate of the muscular strength assistance unit 112 based on the information transmitted from the temperature sensor.

The display unit displays the operation state of the wearable suit (S1640). The display unit 1200 may display the operation state of the wearable suit 100. Here, the operation state may mean whether the wearable suit 100 is operating, whether the wearable suit 100 fails, the remaining time until the operation of the wearable suit 100 is cancelled, the temperature of the muscular strength assistance unit 112, and the like. The display unit 1200 may display the operation state of the wearable suit 100 using one or more LED lamps.

The control unit cools the muscular strength assistance unit (S1650). The control unit 150 cools the muscular strength assistance unit 112 so that the auxiliary force provided to the user 200 is reduced. According to the present invention, the control unit 150 cools the muscular strength assistance unit 112 based on the preset operating time of the user 200. Accordingly, even when the user 200 is holding the heavy load 910 in both hands, it is possible to cancel the operation of the wearable suit 100 according to the intention of the user 200. The control unit 150 may adjust the cooling rate of the muscular strength assistance unit 112 based on the information transmitted from the temperature sensor.

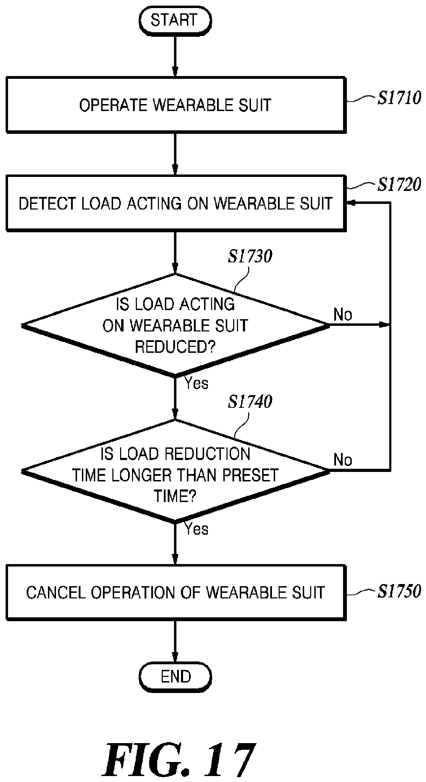

FIG. 17 is a flowchart of a method of controlling a wearable suit according to another embodiment of the present disclosure.

The method of controlling a wearable suit 100 according to another embodiment will be described with reference to FIG. 17.

The user operates the wearable suit (S1710). The user 200 may operate the wearable suit 100 using a separately provided switch 410 or the like. The user 200 transmits the operation signal of the wearable suit 100 to the control unit 150. The control unit 150 controls the power supply unit 160 so that power is supplied from the power supply unit 160 to the muscular strength assistance unit 112 to operate the wearable suit 100.

The sensing unit 420 detects the load acting on the wearable suit (S1720). The sensing unit 420 may detect the load acting on the wearable suit, and transmit the acquired information to the control unit 150. The sensing unit 420 may include one or more load sensors. The sensing unit 420 may be disposed on the connecting unit 140 to detect load acting on the connecting unit 140.

The control unit 150 determines whether the load acting on the wearable suit is reduced (S1730). The control unit 150 may determine whether the load acting on the wearable suit 100 is reduced based on the information transmitted from the sensing unit 420.

When the load acting on the wearable suit decreases, the control unit 150 compares a load reduction time with a preset time (S 1740). Here, the load reduction time means a time during which the load acting on the wearable suit 100 is maintained in a reduced state. When it is determined that the load acting on the wearable suit 100 is reduced, the control unit 150 may compare the load reduction time with a preset time to determine whether the load reduction time is equal to or longer than a preset time.

When the load reduction time is equal to or longer than the preset time, the control unit cancels the operation of the wearable suit (S 1750). The control unit 150 may cancel the operation of the wearable suit 100 when it is determined that the load reduction time is equal to or longer than a preset time.

By cancelling the operation of the wearable suit 100 based on whether the load acting on the wearable suit 100 is reduced, the operation of the wearable suit 100 may be cancelled according to the intention of the user 200 without the switch 410 or the like.

Meanwhile, the load acting on the wearable suit 100 may be reduced in the case when the user 200 lifts the heavy load 910 instantaneously to correctly hold the heavy load 910. In this case, it is possible to prevent the operation of the wearable suit 100 from being erroneously cancelled by determining whether the load reduction time is equal to or longer than a preset time.

Meanwhile, it should be noted that as soon as it is determined that the process S 1740 is omitted and the load is reduced in the process S1730, the operation of the wearable suit 100 may be cancelled.

It should be noted that the above-described methods for controlling a wearable suit 100 according to the present disclosure may be applied to the control of the wearable suit 100 according to purposes and uses within a compatible range.

Although operations are illustrated in the flowcharts/timing charts in this specification as being sequentially performed, this is merely an exemplary description of the technical idea of one embodiment of the present disclosure. In other words, those skilled in the art to which one embodiment of the present disclosure belongs may appreciate that various modifications and changes can be made without departing from essential features of an embodiment of the present disclosure, that is, the sequence illustrated in the flowcharts/timing charts can be changed and one or more operations of the operations can be performed in parallel. Thus, flowcharts/timing charts are not limited to the temporal order.

Various embodiments of systems and techniques described herein can be realized with digital electronic circuits, integrated circuits, field programmable gate arrays (FPGAs), application specific integrated circuits (ASICs), computer hardware, firmware, software, and/or combinations thereof. The various embodiments can include implementation with one or more computer programs that are executable on a programmable system. The programmable system includes at least one programmable processor, which may be a special purpose processor or a general purpose processor, coupled to receive and transmit data and instructions from and to a storage system, at least one input device, and at least one output device. Computer programs (also known as programs, software, software applications, or code) include instructions for a programmable processor and are stored in a "computer-readable recording medium."

The computer-readable recording medium may include all types of storage devices on which computer-readable data can be stored. The computer-readable recording medium may be a non-volatile or non-transitory medium such as a read-only memory (ROM), a random access memory (RAM), a compact disc ROM (CD-ROM), magnetic tape, a floppy disk, a memory card, a hard disk, or an optical data storage device. In addition, the computer-readable recording medium may further include a transitory medium such as a data transmission medium. Furthermore, the computer-readable recording medium may be distributed over computer systems connected through a network, and computer-readable program code can be stored and executed in a distributive manner.

Various implementations of the systems and techniques described herein may be implemented by a programmable computer. Here, the computer includes a programmable processor, a data storage system (including volatile memory, non-volatile memory, or other types of storage systems or combinations thereof) and at least one communication interface. For example, a programmable computer may be one of a server, a network appliance, a set-top box, an embedded device, a computer expansion module, a personal computer, a laptop, a Personal Data Assistant (PDA), a cloud computing system, or a mobile device.

According to an embodiment, a user of a wearable suit can operate the wearable suit using a switch disposed on a forearm (e.g., wrist), and thus, use both hands freely.

According to an embodiment, a wearable suit can be operated by a switch disposed on a user's forearm (e.g., wrist), and thus, operated according to a user's intention.

According to an embodiment, an operation of a wearable suit can be cancelled based on an operating time of a user, so the user can cancel the operation according to a user's intention even when the user is holding an object in both hands.

According to an embodiment, an operation of a wearable suit can be cancelled based on information on load acting on a connecting unit, and thus, be cancelled according to a user's intention without a switch, a sensor installed in a work space, or the like.

## Claims

1. A method of controlling a wearable suit (100) comprising a muscular strength assistance unit including a shape memory alloy material, the method comprising:
heating (S1620) the muscular strength assistance unit (112) to provide an auxiliary force to a user of the wearable suit (100); and
after heating the muscular strength assistance unit (112), cooling (S1650) the muscular strength assistance unit (112)to reduce the auxiliary force,
wherein cooling the muscular strength assistance unit (112) comprises cooling the muscular strength assistance unit (112) based on the user's operating time of the wearable suit (100) the method being **characterized in that** the user's operating time is a preset operating time.

2. The method of claim 1, further comprising detecting (S1630) a temperature of the muscular strength assistance unit (112), wherein cooling the muscular strength assistance unit (112) further comprises cooling the muscular strength assistance unit (112) further based on the temperature of the muscular strength assistance unit (112).

3. The method of claim 2, further comprising displaying (S1640), via a display unit (1200), operation information of the wearable suit (100).

4. The method of claim 3, wherein the operation information includes at least one of:
information as to whether the wearable suit (100) is operating;
information as to whether the wearable suit (100) fails;
a remaining time until the operation of the wearable suit (100) is cancelled; and
the temperature of the muscular strength assistance unit (112).

5. The method of claim 3, or 4, wherein the display unit (1200) includes one or more LED lamps.

6. The method of any one of claims 1 to 5, wherein:
the wearable suit (100) comprises first and second switches (410), and
heating the muscular strength assistance unit (112) includes:
determining (S1520) whether the first and second switches (410) are contacting each other or whether at least one of the first and second switches (410) is contacting an object to be moved by the user;
determining that the user has input an operation signal in response to determining that the first and second switches (410) are contacting each other or at least one of the first and second switches (410) is contacting the object; and
in response to determining that the user has input the operation signal, heating the muscular strength assistance unit (112).

7. The method of any one of claim 1 to 5, further comprising detecting a load of an object acting on the wearable suit (100),
wherein heating or cooling the muscular strength assistance unit (112) includes heating or cooling the muscular strength assistance unit (112) based on the load, and
wherein the object is moved by the user.

8. A wearable suit (100) configured to assist a user of the wearable suit (100) to move an object, comprising:
a muscular strength assistance unit (112) including a shape memory alloy material and configured to provide, when heated, an auxiliary force to a muscular strength of the user and decrease the auxiliary force when cooled; and
a control unit (150) configured to heat or cool the muscular strength assistance unit (112), wherein the control unit (150) is configured to cool the muscular strength assistance unit (112) based on the user's operating time of the wearable suit (100), the wearable suit being **characterized in that** the user's operating time is a preset operating time.

9. The wearable suit of claim 8, further comprising a temperature sensor configured to detect a temperature of the muscular strength assistance unit (112), wherein the control unit (150) is configured to cool the muscular strength assistance unit (112) further based on the temperature of the muscular strength assistance unit (112).

10. The wearable suit of claim 8, or 9, further comprising a display unit (1200) configured to display operation information of the wearable suit (100).

11. The wearable suit of claim 10, wherein the display unit (1200) is disposed on an arm of the user.

12. The wearable suit of any one of claims 8 to 11, further comprising first and second switches (410),
wherein the control unit (150) is configured to:
determine (1) whether the first and second switches (410) are contacting each other or (2) whether at least one of the first and second switches is contacting the object;
determine that the user has input an operation signal in response to determining that (1) the first and second switches (410) are contacting each other or (2) at least one of the first and second switches (410) is contacting the object; and
in response to determining that the user has input the operation signal, heat the muscular strength assistance unit (112).

13. The wearable suit of claim 12, wherein the first and second switches (410) include respectively first and second wearing members disposed respectively on both forearms of the user.

14. The wearable suit of claim 12, or 13, wherein the first and second switches (410) include respectively first and second wearing members disposed respectively on both wrists of the user.

15. The wearable suit of any one of claims 8 to 14, further comprising a sensing unit (420) configured to detect a load of the object acting on the wearable suit (100), wherein the control unit (150) is configured to heat or cool the muscular strength assistance unit (112) based on the load of the object.

## Patentansprüche

1. Verfahren zur Steuerung eines Wearable-Anzugs (100), das eine Muskelstärke-Assistenzeinheit mit einem Formgedächtnis-Legierungsmaterial aufweist, wobei das Verfahren aufweist:
Erwärmen (S1620) der Muskelstärke-Assistenzeinheit (112), um eine Hilfskraft für einen Benutzer des Wearable-Anzugs (100) bereitzustellen; und
nach dem Erwärmen der Muskelstärke-Assistenzeinheit (112) erfolgendes Kühlen (S1650) der Muskelstärkeassistenzeinheit (112), um die Hilfskraft zu reduzieren,
wobei das Kühlen der Muskelstärke-Assistenzeinheit (112) aufweist: Kühlen der Muskelstärke-Assistenzeinheit (112) auf der Grundlage der Benutzerbetriebszeit des Wearable-Anzugs (100), wobei das Verfahren **dadurch gekennzeichnet ist, dass** die Benutzerbetriebszeit eine voreingestellte Betriebszeit ist.

2. Verfahren nach Anspruch 1, das ferner aufweist: Detektieren (S1630) einer Temperatur der Muskelstärke-Assistenzeinheit (112), wobei das Kühlen der Muskelstärke-Assistenzeinheit (112) ferner aufweist: Kühlen der Muskelstärke-Assistenzeinheit (112) ferner auf der Grundlage der Temperatur der Muskelstärke-Assistenzeinheit (112).

3. Verfahren nach Anspruch 2, das ferner aufweist: über eine Anzeigeeinheit (1200) erfolgendes Anzeigen (S1640) von Betriebsinformationen des Wearable-Anzugs (100).

4. Verfahren nach Anspruch 3, wobei die Betriebsinformationen ferner aufweisen:
Informationen, ob der Wearable-Anzug (100) arbeitet;
Informationen, ob der Wearable-Anzug (100) ausfällt;
eine Restzeit, bis der Betrieb des Wearable-Anzugs (100) eingestellt wird; und/oder die Temperatur der Muskelstärke-Assistenzeinheit (112).

5. Verfahren nach Anspruch 3 oder 4, wobei die Anzeigeeinheit (1200) eine oder mehrere LED-Leuchten aufweist.

6. Verfahren nach einem der Ansprüche 1 bis 5, wobei:
der Wearable-Anzug (100) einen ersten und zweiten Schalter (410) aufweist und
das Erwärmen der Muskelstärke-Assistenzeinheit (112) aufweist:
Bestimmen (S1520), ob der erste und zweite Schalter (410) einander kontaktieren oder ob der erste und/oder zweite Schalter (410) ein vom Benutzer zu bewegendes Objekt kontaktieren;
Bestimmen, dass der Benutzer ein Betriebssignal als Reaktion auf die Bestimmung eingegeben hat, dass der erste und zweite Schalter (410) einander kontaktieren oder der erste und/oder zweite Schalter (410) das Objekt kontaktieren; und
als Reaktion auf die Bestimmung, dass der Benutzer das Betriebssignal eingegeben hat, erfolgendes Erwärmen der Muskelstärke-Assistenzeinheit (112).

7. Verfahren nach einem der Ansprüche 1 bis 5, das ferner aufweist: Detektieren einer auf den Wearable-Anzug (100) wirkenden Last eines Objekts,
wobei das Erwärmen oder Kühlen der Muskelstärke-Assistenzeinheit (112) aufweist: Erwärmen oder Kühlen der Muskelstärke-Assistenzeinheit (112) auf der Grundlage der Last und
wobei das Objekt vom Benutzer bewegt wird.

8. Wearable-Anzug (100), das so konfiguriert ist, dass es einem Benutzer des Wearable-Anzugs (100) dabei assistiert, ein Objekt zu bewegen, und das aufweist:
eine Muskelstärke-Assistenzeinheit (112), die ein Formgedächtnis-Legierungsmaterial aufweist und so konfiguriert ist, dass sie bei Erwärmung eine Hilfskraft für eine Muskelstärke des Benutzers bereitstellt und bei Kühlung die Hilfskraft verringert; und
eine Steuereinheit (150), die so konfiguriert ist, dass sie die Muskelstärke-Assistenzeinheit (112) erwärmt oder kühlt, wobei die Steuereinheit (150) so konfiguriert ist, dass sie die Muskelstärke-Assistenzeinheit (112) auf der Grundlage der Benutzerbetriebszeit des Wearable-Anzugs (100) kühlt, wobei der Wearable-Anzug **dadurch gekennzeichnet ist, dass** die Benutzerbetriebszeit eine voreingestellte Betriebszeit ist.

9. Wearable-Anzugnach Anspruch 8, das ferner einen Temperatursensor aufweist, der so konfiguriert ist, dass er eine Temperatur der Muskelstärke-Assistenzeinheit (112) detektiert, wobei die Steuereinheit (150) so konfiguriert ist, dass sie die Muskelstärke-Assistenzeinheit (112) ferner auf der Grundlage der Temperatur der Muskelstärke-Assistenzeinheit (112) kühlt.

10. Wearable-Anzugnach Anspruch 8 oder 9, das ferner eine Anzeigeeinheit (1200) aufweist, die so konfiguriert ist, dass sie Betriebsinformationen des Wearable-Anzugs (100) anzeigt.

11. Wearable-Anzugnach Anspruch 10, wobei die Anzeigeeinheit (1200) auf einem Arm des Benutzers angeordnet ist.

12. Wearable-Anzugnach einem der Ansprüche 8 bis 11, das ferner einen ersten und zweiten Schalter (410) aufweist:
wobei die Steuereinheit (150) so konfiguriert ist, dass sie:
bestimmt, ob (1) der erste und zweite Schalter (410) einander kontaktieren oder ob (2) der erste und/oder zweite Schalter das Objekt kontaktieren;
bestimmt, dass der Benutzer ein Betriebssignal als Reaktion auf die Bestimmung eingegeben hat, dass (1) der erste und zweite Schalter (410) einander kontaktieren oder (2) der erste und/oder zweite Schalter (410) das Objekt kontaktieren; und
als Reaktion auf die Bestimmung, dass der Benutzer das Betriebssignal eingegeben hat, die Muskelstärke-Assistenzeinheit (112) erwärmt.

13. Wearable-Anzugnach Anspruch 12, wobei der erste und zweite Schalter (410) ein erstes bzw. zweites Trageteil aufweisen, die auf beiden Unterarmen des Benutzers angeordnet sind.

14. Wearable-Anzugnach Anspruch 12, wobei der erste und zweite Schalter (410) ein erstes bzw. zweites Trageteil aufweisen, die auf beiden Handgelenken des Benutzers angeordnet sind.

15. Wearable-Anzugnach einem der Ansprüche 8 bis 14, das ferner eine Erfassungseinheit (420) aufweist, die so konfiguriert ist, dass sie eine auf den Wearable-Anzug (100) wirkende Last des Objekts detektiert, wobei die Steuereinheit (150) so konfiguriert ist, dass sie die Muskelstärke-Assistenzeinheit (112) auf der Grundlage der Last des Objekts erwärmt oder kühlt.

## Revendications

1. Procédé de commande d'une combinaison à porter (100) comprenant une unité d'assistance à la force musculaire comportant un matériau d'alliage à mémoire de forme, le procédé comprenant :
le chauffage (S1620) de l'unité d'assistance à la force musculaire (112) pour fournir une force auxiliaire à un utilisateur de la combinaison à porter (100) ; et
après le chauffage de l'unité d'assistance à la force musculaire (112), le refroidissement (S1650) de l'unité d'assistance à la force musculaire (112) pour réduire la force auxiliaire,
dans lequel le refroidissement l'unité d'assistance à la force musculaire (112) comprend le refroidissement de l'unité d'assistance à la force musculaire (112) sur la base du temps d'exploitation par l'utilisateur de la combinaison à porter (100), le procédé étant **caractérisé en ce que**
le temps d'exploitation par l'utilisateur est un temps de fonctionnement prédéfini.

2. Procédé selon la revendication 1, comprenant en outre la détection (S1630) de la température de l'unité d'assistance à la force musculaire (112), dans lequel le refroidissement l'unité d'assistance à la force musculaire (112) comprend en outre le refroidissement de l'unité d'assistance à la force musculaire (112) sur la base de la température de l'unité d'assistance à la force musculaire (112) également.

3. Procédé selon la revendication 2, comprenant en outre l'affichage (S1640) d'informations de fonctionnement de la combinaison à porter (100) via une unité d'affichage (1200).

4. Procédé selon la revendication 3, dans lequel les informations de fonctionnement comportent au moins l'un parmi :
des informations permettant de savoir si la combinaison à porter (100) fonctionne ;
des informations permettant de savoir s'il y a une défaillance de la combinaison à porter (100) ;
le temps restant avant une annulation du fonctionnement de la combinaison à porter (100) ; et
la température de l'unité d'assistance à la force musculaire (112).

5. Procédé selon la revendication 3, ou 4, dans lequel l'unité d'affichage (1200) comporte une ou plusieurs lampes DEL.

6. Procédé selon l'une des revendications 1 à 5, dans lequel :
la combinaison à porter (100) comprend des premier et deuxième commutateurs (410), et
le chauffage de l'unité d'assistance à la force musculaire (112) comporte :
la détermination (S1520) permettant de savoir si les premier et deuxième commutateurs (410) sont en contact l'un avec l'autre ou si au moins un des premier et deuxième commutateurs (410) est en contact avec un objet à déplacer par l'utilisateur ;
lorsqu'il est déterminé que les premier et deuxième commutateurs (410) sont en contact l'un avec l'autre ou qu'au moins un des premier et deuxième commutateurs (410) est en contact avec l'objet, la détermination permettant de savoir si l'utilisateur a entré un signal de fonctionnement ; et
lorsqu'il est déterminé que l'utilisateur a entré le signal de fonctionnement, le chauffage de l'unité d'assistance à la force musculaire (112).

7. Procédé selon l'une des revendications 1 à 5, comprenant en outre la détection d'une charge d'un objet agissant sur la combinaison à porter (100),
dans lequel le chauffage ou le refroidissement de l'unité d'assistance à la force musculaire (112) comporte le chauffage ou le refroidissement de l'unité d'assistance à la force musculaire (112) sur la base de la charge, et dans lequel l'objet est déplacé par l'utilisateur.

8. Combinaison à porter (100) configurée pour aider un utilisateur de la combinaison à porter (100) à déplacer un objet, comprenant :
une unité d'assistance à la force musculaire (112) comportant un matériau d'alliage à mémoire de forme et configurée pour fournir une force auxiliaire à une force musculaire de l'utilisateur lorsqu'elle est chauffée, et pour diminuer la force auxiliaire lorsqu'elle est refroidie ; et
une unité de commande (150) configurée pour chauffer ou refroidir l'unité d'assistance à la force musculaire (112), dans laquelle l'unité de commande (150) est configurée pour refroidir l'unité d'assistance à la force musculaire (112) sur la base du temps d'exploitation par l'utilisateur de la combinaison à porter (100), la combinaison à porter étant **caractérisée en ce que** le temps d'exploitation par l'utilisateur est un temps de fonctionnement prédéfini.

9. Combinaison à porter selon la revendication 8, comprenant en outre un capteur de température configuré pour détecter la température de l'unité d'assistance à la force musculaire (112), dans laquelle l'unité de commande (150) est configurée pour refroidir l'unité d'assistance à la force musculaire (112) sur la base de la température de l'unité d'assistance à la force musculaire (112) également.

10. Combinaison à porter selon la revendication 8, ou 9, comprenant en outre une unité d'affichage (1200) configurée pour afficher des informations de fonctionnement de la combinaison à porter (100).

11. Combinaison à porter selon la revendication 10, dans laquelle l'unité d'affichage (1200) est disposée sur un bras de l'utilisateur.

12. Combinaison à porter selon l'une des revendications 8 à 11, comprenant en outre des premier et deuxième commutateurs (410),
dans laquelle l'unité de commande (150) est configurée pour :
déterminer (1) si les premier et deuxième commutateurs (410) sont en contact l'un avec l'autre ou (2) si au moins un des premier et deuxième commutateurs est en contact avec l'objet ;
lorsqu'il est déterminé (1) que les premier et deuxième commutateurs (410) sont en contact l'un avec l'autre ou (2) qu'au moins un des premier et deuxième commutateurs (410) est en contact avec l'objet, déterminer que l'utilisateur a entré un signal de fonctionnement ; et
lorsqu'il est déterminé que l'utilisateur a entré le signal de fonctionnement, chauffer l'unité d'assistance à la force musculaire (112).

13. Combinaison à porter selon la revendication 12, dans laquelle les premier et deuxième commutateurs (410) comportent respectivement des premier et deuxième éléments à porter disposés respectivement sur les deux avant-bras de l'utilisateur.

14. Combinaison à porter selon la revendication 12 ou 13, dans laquelle les premier et deuxième commutateurs (410) comportent respectivement des premier et deuxième éléments à porters disposés respectivement sur les deux poignets de l'utilisateur.

15. Combinaison à porter selon l'une des revendications 8 à 14, comprenant en outre une unité de détection (420) configurée pour détecter une charge de l'objet agissant sur la combinaison à porter (100), dans laquelle l'unité de commande (150) est configurée pour chauffer ou refroidir l'unité d'assistance à la force musculaire (112) sur la base de la charge de l'objet.
